# EUROPÄISCHE PATENTSCHRIFT

(11) **EP 2 815 049 B1**
(45) Veröffentlichungstag und Bekanntmachung des Hinweises auf die Patenterteilung: **14.07.2021**
(21) Anmeldenummer: 13705950.7
(22) Anmeldetag: 07.02.2013
(51) Int. Cl.: E05D 5/12, F16D 1/08, F16C 11/04

(54) **HAUSHALTSGERÄT MIT EINER TÜRBLATT-LAGERVORRICHTUNG**
HOUSEHOLD APPLIANCE WITH A DOOR LEAF BEARING ELEMENT
APPAREIL MÉNAGER AVEC UN ELÉMENT DE PALIER DE BATTANT

(30) Priorität: 17.02.2012 DE 102012202440
(43) Veröffentlichungstag der Anmeldung: 24.12.2014
(73) Patentinhaber: BSH Hausgeräte GmbH, 81739 München (DE)
(72) Erfinder: RAAB, Alfred, 73460 Hüttlingen (DE); SCHMID, Christian, 73432 Aalen (DE); SPILLER, Ralf, 89537 Giengen (DE)
(86) Internationale Anmeldenummer: PCT/EP2013/052437
(87) Internationale Veröffentlichungsnummer: WO 2013/120761

(56) Entgegenhaltungen:
- EP-A1- 2 543 806
- EP-A2- 0 524 451
- WO-A1-98/55719
- DE-A1- 2 511 806
- DE-A1- 10 259 065
- DE-A1-102008 021 343
- DE-U1-202004 007 067
- JP-A- H08 219 627
- US-A- 3 438 660
- US-A- 5 928 763
- None

## Beschreibung

Die Erfindung betrifft ein Haushaltsgerät, insbesondere Haushaltskältegerät, aufweisend einen Korpus, einen im Korpus angeordneten Geräteraum und ein zum Öffnen und Schließen des Geräteraums ausgebildetes Türblatt, das schwenkbar bezüglich des Korpus mittels wenigstens einer Lagervorrichtung gelagert ist, die einen Lagerzapfen und eine auf den Lagerzapfen aufgesteckte Lagerbuchse aufweist.

Die WO 2010/057790 A1 offenbart ein Haushaltsgerät, insbesondere Kältegerät, mit zumindest einem Scharnier zum Lagern einer Tür des Haushaltsgeräts, wobei das Scharnier einen Lagerzapfen aufweist, der zumindest ein erstes freies Ende aufweist, und einer Lagerbuchse, die eine Aufnahme für ein freies Ende des Lagerzapfens und einen Durchführungskanal für ein Kabel umfasst und so ausgebildet ist, dass sie bei der Montage auf das erste freie Ende des Lagerzapfens aufsteckbar ist, wobei der Lagerzapfen eine erste Positioniereinrichtung aufweist, die gewährleistet, dass die Lagerbuchse nur in einer ersten Winkelstellung und nicht in einer zweiten Winkelstellung auf das erste freie Ende des Lagerzapfens aufsteckbar ist.

WO 98/55719 A1 offenbart eine Lagerung für eine verschwenkbare Tür eines Haushaltsgerätes, mit einem an einem Befestigungsteil ausgebildeten Lagerelement, welches mit einem Zwischenstück versehen ist, indem das Zwischenstück mit seiner Zapfeninnenseite form- und/oder kraftschlüssig mit dem Lagerelement zusammenwirkt.

DE 25 11 806 A1 offenbart eine Nabe mit einstückig damitausgebildeten Haltemitteln, um darin eine Welle durch Anlegen von Haltekräften an dem Aussenumfang der Welle festzuhalten, wobei die Welle einen gekrümmten Außenumfangsoberflächenanteil und einen ebenen Oberflächenteil aufweist.

DE 20 2004 007067 U1 offenbart ein hohlachsiges Scharnier für ein Haushaltsgerät, umfassend unter Anderem einen Lagerarm, aufweisend einen in einen Längshohlraum einer Lagerbuchse eingreifenden Lagerzapfen, wobei der der Lagerzapfen dabei zumindest in Drehrichtung des Lagerzapfens form- und/oder kraftschlüssig gehalten ist

DE 10 2008 021343 A1 offenbart ein Haushaltsgerät mit einem Korpus und einer durch ein Scharnier daran angelenkten Tür, wobei das Scharnier einen Lagerzapfen aufweist, auf dem ein Lagerbolzen aufgesetzt ist, indem in dem Lagerbolzen ein viereckiges Loch vorgesehen ist, welches den Lagerzapfen spielfrei aufnimmt.

Die Aufgabe der Erfindung ist es, ein Haushaltsgerät, insbesondere Haushaltskältegerät anzugeben, bei dem die Montage einer Lagerbuchse auf einem Lagerzapfen einer das Türblatt schwenkbar bezüglich des Korpus lagernden Lagervorrichtung verbessert ist.

Die Aufgabe der Erfindung wird gelöst durch die Merkmale des vorliegenden unabhängigen Anspruchs 1. Vor diesem Hintergrund betrifft die Erfindung ein Haushaltsgerät, insbesondere Haushaltskältegerät, aufweisend einen Korpus, einen im Korpus angeordneten Geräteraum und ein zum Öffnen und Schließen des Geräteraums ausgebildetes Türblatt, das schwenkbar bezüglich des Korpus mittels wenigstens einer Lagervorrichtung gelagert ist, die einen Lagerzapfen und eine auf den Lagerzapfen aufgesteckte Lagerbuchse aufweist, wobei die Lagervorrichtung eine Klemmvorrichtung aufweist, die ausgebildet ist, die Lagerbuchse in ihrer auf den Lagerzapfen aufgesteckten Position an dem Lagerzapfen zu halten. Die Klemmvorrichtung ist insbesondere ausgebildet, die Lagerbuchse in ihrer auf den Lagerzapfen aufgesteckten Position an dem Lagerzapfen mittels Klemmkraft, insbesondere ausschließlich mittels Klemmkraft, d.h. ohne eine formschlüssige Verbindung zu halten.

Durch die Klemmvorrichtung können unterschiedliche Maßtoleranzen zwischen Lagerzapfen und Lagerbuchse, wie sie beispielsweise durch die Fertigungstoleranzen entstehen, ausgeglichen werden, ohne dass die Klemmwirkung verloren geht. Gegebenenfalls können Beschädigungen insbesondere der Lagerbuchse vermieden werden, da Bauteil schädigende Materialspannungen oder Risse aufgrund zu hoher Klemmkraft nicht mehr auftreten. Die Montagekraft, das heißt die Kraft zum Aufstecken der Lagerbuchse auf den Lagerzapfen kann zumindest nahezu konstant sein. Bei einem Transport der Baugruppe von Lagerwinkel und Lagerbuchse bleibt die Lagerbuchse auf dem Lagerzapfen fest sitzen, ohne dass die Gefahr besteht, dass die Lagerbuchse unbeabsichtigt herunterrutscht. Durch den erreichten Klemmsitz kann Abrieb, d.h. Verschleiß aufgrund beispielsweise eines Rüttelns beim Transport verhindert sein.

Im Fall eines erfindungsgemäßen Haushaltskältegeräts kann der Korpus durch ein separates Gehäuse, einer rahmenartigen Tragstruktur oder bereits allein durch einen Innenbehälter gebildet werden. Der Innenbehälter kann insbesondere von Wärmeisolationsmaterial umgeben, insbesondere umschäumt sein. Das Türblatt zum Öffnen und Schließen des beispielsweise durch einen Innenbehälter gebildeten Geräteraums kann schwenkbar an dem Korpus, dem Gehäuse, der rahmenartigen Tragstruktur und/oder dem Innenbehälter gelagert sein. Dazu kann die Lagervorrichtung mit dem Korpus, dem Gehäuse, der rahmenartigen Tragstruktur und/oder dem Innenbehälter verbunden, insbesondere unmittelbar an diesen befestigt sein. Die Lagervorrichtung kann einen Befestigungsflansch aufweisen, an dem der Lagerzapfen ausgebildet ist. Der Lagerzapfen kann mit dem Befestigungsflansch verbunden sein. Insbesondere kann der Lagerzapfen einteilig mit dem Befestigungsflansch ausgebildet sein. Dazu können der Befestigungsflansch und der Lagerzapfen als ein Lagerwinkel aus einem gebogenen und/oder gestanzten Metallblech hergestellt sein.

Die Lagerbuchse dient erfindungsgemäß dazu, eine äußere, zumindest im Wesentlichen kreiszylindrische Außenkontur zu schaffen, um die sich das Türblatt um die Schwenkachse drehen kann. Indem die Lagerbuchse erfindungsgemäß eine zumindest im Wesentlichen kreiszylindrische Außenkontur aufweist, kann der Lagerzapfen selbst eine beliebige Querschnittskontur, insbesondere auch eine rechteckige oder quadratische Querschnittskontur aufweisen. Erfindungsgemäß weist der Lagerzapfen eine rechteckige Querschnittskontur auf. Insoweit kann die Lagervorrichtung kostengünstiger hergestellt werden, da trotz einer zusätzlichen Lagerbuchse, eine besondere Bearbeitung, bspw. ein spanendes Abdrehen des metallischen Lagerzapfens entfallen kann.

Sowohl die Lagerbuchse, als auch der Lagerzapfen können fertigungsbedingte Maßabweichungen aufweisen. Dies kann beispielsweise bei einer aus Kunststoff im Spitzgussverfahren hergestellten Lagerbuchse durch eine Schrumpfung des Kunststoffmaterials nach dem Entformen auftreten. Bei dem Lagerzapfen können fertigungsbedingte Maßabweichungen beispielsweise durch eine Abnutzung des Stanzwerkzeuges oder durch unterschiedlich dicke Blech-Halbzeuge auftreten. Jegliche, auch andere als die genannten Gründe für Maßabweichungen können zur Folge haben, dass eine auf den Lagerzapfen aufgesteckte Lagerbuchse in Art einer Wurfpassung nur lose auf dem Lagerzapfen aufsitzt und beispielsweise wackeln kann oder während der Fertigung sogar die Gefahr besteht, dass die Lagerbuchse von dem Lagerzapfen ungewollt abfällt. Eine andere Folge kann sein, dass die Lagerbuchse in Art einer Presspassung nur mit erheblichem Kraftaufwand auf den Lagerzapfen aufgepresst werden kann. Dies kann dazu führen, dass die fest auf den Lagerzapfen aufgepresste Lagerbuchse unter einer dauerhaften Dehnspannung steht, was insbesondere bei Lagerbuchsen aus Kunststoff sehr schnell zu einer Rissbildung und damit zum Versagen der Lagerbuchse führen kann.

Indem erfindungsgemäß die Lagervorrichtung eine Klemmvorrichtung aufweist, die ausgebildet ist, die Lagerbuchse in ihrer auf den Lagerzapfen aufgesteckten Position an dem Lagerzapfen zu halten, können fertigungsbedingte Toleranzen von Lagerzapfen und/oder Lagerbuchse durch die Klemmvorrichtung ausgeglichen werden. Die Klemmvorrichtung kann dabei einerseits für ein leichtgängiges, d.h. Kraft sparendes Aufstecken der Lagerbuchse auf den Lagerzapfen sorgen und andererseits eine gewisse Klemmkraft zwischen Lagerbuchse und Lagerzapfen erzeugen, so dass die Lagerbuchse nicht in unerwünschter Weise von dem Lagerzapfen abrutschen oder abfallen kann. Die Klemmvorrichtung kann insoweit ausgebildet sein, ein großes Toleranzspektrum von Spaltmaßen zwischen Lagerbuchse und Lagerzapfen auszugleichen.

Erfindungsgemäß weist die Lagerbuchse die Klemmvorrichtung auf. Dadurch kann die Klemmvorrichtung zusammen mit der Lagerbuchse durch einfaches Aufstecken der Lagerbuchse auf den Lagerzapfen montiert werden. Die Klemmvorrichtung kann insoweit bereits auf der Lagerbuchse vormontiert, befestigt und/oder ausgebildet sein.

Dazu kann die Klemmvorrichtung mit der Lagerbuchse verbunden oder einteilig mit der Lagerbuchse ausgebildet sein. In der einen Ausführungsform, in der die Klemmvorrichtung mit der Lagerbuchse verbunden ist, kann die Klemmvorrichtung von einem separaten Teil gebildet werden. Die separate Klemmvorrichtung kann aus demselben Werkstoff wie die Lagerbuchse oder einem anderen Werkstoff als die Lagerbuchse hergestellt sein. Ist die Lagerbuche aus Kunststoff im Spritzgussverfahren hergestellt, so kann die aus einem anderen Werkstoff, beispielsweise Metall, insbesondere Federstahl hergestellte Klemmvorrichtung beispielsweise durch Umspritzen der Klemmvorrichtung mit dem Kunststoffmaterial der Lagerbuchse mit der Lagerbuchse verbunden werden. In der anderen Ausführungsform, in der die Klemmvorrichtung mit der Lagerbuchse einteilig ausgebildet ist, kann die Klemmvorrichtung beispielsweise aus Kunststoff hergestellt sein und während des Spritzens der aus Kunststoff bestehenden Lagerbuchse mitgebildet bzw. mit angeformt werden. Gegebenenfalls können die Lagerbuchse und die Klemmvorrichtung auch als einteiliges Metallgussteil, insbesondere Aluminiumdruckgussteil hergestellt sein.

Erfindungsgemäß ist die Klemmvorrichtung von zwei Klemmrippen gebildet. Die Klemmrippen können leistenförmig mit einer langen und einer kurzen Seitenkante ausgeführt sein. Die lange Seitenkante erstreckt sich dabei entlang einer Längserstreckung der Klemmrippen. Die Klemmrippen können sich parallel zur Symmetrielinie der Lagerbuchse und/oder des Lagerzapfens bzw. parallel zur Schwenkachse des Türblatts längserstrecken. Die freie lange Seitenkante der Klemmrippen kann in der montierten Position der Lagerbuchse auf dem Lagerzapfen an einer Mantelwand des Lagerzapfens berührend anliegen.

Die Klemmrippen sind in Richtung des Lagerzapfens vorspringend ausgebildet. Die freien Seitenkanten der Klemmrippen liegen dann in der montierten Position der Lagerbuchse auf dem Lagerzapfen an einer Mantelwand des Lagerzapfens berührend an. Die Klemmrippen weisen dabei eine ausreichende Elastizität auf, so dass während eines Aufsteckens der Lagerbuchse auf den Lagerzapfen die Klemmrippen durch den in die Lagerbuchse eindringenden Lagerzapfen elastisch verformt, insbesondere elastisch umgebogen werden. Die durch das elastische Verformen, insbesondere elastische Umbiegen der Klemmrippen entstehende Federkraft bzw. Spannkraft bewirkt eine Klemmkraft, welche die Lagerbuchse auf den Lagerzapfen festklemmt.

Die Klemmrippen können jeweils einen mit der Lagerbuchse verbundenen Basisabschnitt, einen freien, an dem Lagerzapfen anliegenden Kopfabschnitt und einen den Basisabschnitt mit dem Kopfabschnitt verbindenden Stegabschnitt aufweisen, der unter einem vom rechten Winkel abweichenden Winkel, insbesondere in einem Winkel von 45 Grad, bezüglich der Oberfläche des Lagerzapfens ausgerichtet ist. Die Klemmrippen können dabei beispielsweise leistenförmig mit einer langen und einer kurzen Seitenkante ausgeführt sein. Die lange Seitenkante erstreckt sich dabei entlang einer Längserstreckung der Klemmrippen. Die Klemmrippen können sich parallel zur Symmetrielinie der Lagerbuchse und/oder des Lagerzapfens bzw. parallel zur Schwenkachse des Türblatts längserstrecken. Die freie lange Seitenkante der Klemmrippen bildet insoweit den Kopfabschnitt, der in der montierten Position der Lagerbuchse auf dem Lagerzapfen an einer Mantelwand des Lagerzapfens berührend anliegt. Der Stegabschnitt steht in dieser Ausführungsform nicht senkrecht von der inneren Mantelwand der Lagerbuchse in Richtung des Lagerzapfens ab. Sondern der Stegabschnitt erstreckt sich vielmehr in dem genannten vom rechten Winkel abweichenden Winkel von der inneren Mantelwand der Lagerbuchse in Richtung des Lagerzapfens ab. Dies bewirkt, dass der Kopfabschnitt bzw. die freie lange Seitenkante nicht senkrecht auf die Oberfläche des Lagerzapfens auftrifft, sondern in einem spitzen Winkel dazu. So kann der Lagerzapfen während des Aufsteckens der Lagerbuchse auf den Lagerzapfen den Stegabschnitt der Klemmrippen durch eine seitlich auf den Stegabschnitt wirkende Kraft die Klemmrippen elastisch umbiegen. Dies kann ein unerwünschtes Knicken des Stegabschnitts der Klemmrippen verhindern. Der Stegabschnitt wird durch seine schräge Anordnung flächig um den Basisabschnitt gebogen, ohne in sich einzuknicken.

Erfindungsgemäß weist die Lagerbuchse einen zumindest im Wesentlichen hohlzylindrischen Grundkörper auf, der eine innere Mantelwand aufweist, die mit wenigstens einer von dem Grundkörper, insbesondere der Mantelwand in das Zentrum der Lagerbuchse vorspringenden Steg aufweist, an dem die Klemmrippen angeordnet, insbesondere ausgebildet sind. Die äußere Mantelwand der Lagerbuchse kann einen geradzylindrischen Mantelwandabschnitt aufweisen. An einem dem festen Ende des Lagerzapfens zuweisenden Ende kann die Lagerbuchse einen radial vorspringenden Ringbund aufweisen. Der Ringbund kann als Sitzfläche für das Türblatt dienen. An einem freien Ende der Lagerbuchse, insbesondere an einem dem Ringbund gegenüberliegenden Ende der Lagerbuchse kann die Lagerbuchse einen kegelstumpfförmigen Mantelwandabschnitt aufweisen. Der kegelstumpfförmige Mantelwandabschnitt kann dazu dienen, die Lagerbuchse leicht zentrieren zu können, wenn sie in eine Sitzaufnahme des Türblatts eingesteckt wird, bzw. wenn das Türblatt mit seiner Sitzaufnahme auf die Lagerbuchse aufgesteckt wird. Insoweit kann die Montage des Türblatts an der Lagervorrichtung vereinfacht werden. Der wenigstens eine Steg, d.h. die Gestalt und Größe des wenigstens einen Stegs bestimmt die Größe, Gestalt und Kontur, der lichten Öffnung der Lagerbuchse, in welche der Lagerzapfen einzustecken ist.

Der wenigstens eine Steg begrenzt damit die Öffnung der Lagerbuchse auf das Maß des Lagerzapfens.

Sowohl bei dem erfindungsgemäßen rechteckigen Querschnitt des Lagerzapfens als auch bei einem möglichen quadratischen Querschnitt des Lagerzapfens, können sich beispielsweise vier Stege von der inneren Mantelwand der Lagerbuchse wegerstrecken, von denen jeweils ein Steg gegen eine Seitenfläche des Lagerzapfens gerichtet ist. Statt eines einzelnen Stegs an einer Seitenfläche, können auch zwei oder mehrere Stege je Seitenfläche des Lagerzapfens vorgesehen sein.

Erfindungsgemäß weist die Kontur des Querschnitts des wenigstens einen Stegs zwei rechte Winkel auf, welche einen geraden Stirnkonturabschnitt einer Stirnfläche des Stegs begrenzen, wobei an genau oder mindestens einer sich an die Stirnfläche, insbesondere in einem rechten Winkel, anschließenden Seitenwand des Stegs die Klemmrippen angeordnet, insbesondere ausgebildet, ist. Mit anderen Worten kann der eine und/oder jeder weitere Steg im Querschnitt rechteckig oder quadratisch ausgebildet sein. Eine Seite ist dabei unmittelbar mit dem Grundkörper der Lagerbuchse verbunden. Die beiden parallelen Seiten, die sich von dem Grundkörper der Lagerbuchse wegerstrecken bilden Seitenwände des Stegs. Die Seitenwände des Stegs begrenzen die freie Stirnseite, welche dem Grundkörper gegenüberliegt und welche an der Oberfläche des Lagerzapfens anliegt. Die Klemmrippen sind in dieser Ausführungsform also an wenigstens einer der beiden Seitenwände des Stegs ausgebildet und erstrecken sich in Richtung der Oberfläche des Lagerzapfens.

Erfindungsgemäß weisen die Klemmrippen an ihrem freien Enden eine über die Stirnfläche des Stegs nach innen vorspringende Rippenkante auf. Damit die freien Kanten der Klemmrippen sich an den Oberflächen des Lagerzapfens anlegen können, sollen sich die freien Kanten über die Stirnfläche des Stegs hinaus in Richtung des Lagerzapfens erstrecken. So stehen die freien Kanten der Klemmrippen über die Stirnflächen des Stegs hinaus. Der Steg legt die Klemmrippen näher an den Lagerzapfen heran, so dass die Klemmrippen klein ausgebildet sein können. Andererseits kann der Steg eine höhere Steifigkeit bewirken, so dass eine ausreichend hohe Klemmkraft erzeugt werden kann, bzw. der Steg einer großen Klemmkraft widerstehen kann.

Erfindungsgemäß sind zwei Klemmrippen an in das Zentrum der Lagerbuchse vorspringenden gegenüberliegenden inneren Stegen der Lagerbuchse angeordnet. Ergänzend können zwei in Richtung des Lagerzapfens vorspringende Klemmrippen an gegenüberliegenden Seiten einer inneren Mantelwand angeordnet sein. Durch eine gegenüberliegende Anordnung der Klemmrippen kann der Lagerzapfen erfindungsgemäß von gegenüberliegenden Seiten geklemmt werden. Mit anderen Worten kann der Lagerzapfen durch zwei zumindest im Wesentlichen entgegengesetzte Kräfte gestützt, insbesondere geklemmt werden.

Erfindungsgemäß sind die Klemmrippen elastisch ausgebildet, insbesondere aus einem elastischen Material hergestellt sein. Ist die Lagerbuchse aus Kunststoff, insbesondere im Spritzgussverfahren hergestellt, so können die Klemmrippen ebenfalls aus Kunststoff hergestellt sein. Kunststoffe, insbesondere Thermoplaste weisen im Allgemeinen inhärente elastische Eigenschaften auf. Die Elastizität der Klemmrippen kann außerdem durch die Wahl der Rippendicke beeinflusst werden. So kann den Klemmrippen eine deutlich höhere Flexibilität als dem Grundkörper der Lagerbuchse gegeben werden, wenn die Wandstärke der Klemmrippen deutlich geringer ausgeführt wird, als die Wandstärke des Grundkörpers der Lagerbuchse. Sind die Klemmrippen aus einem anderen Werkstoff, beispielsweise Metall ausgebildet, kann die Elastizität der Klemmrippen durch die Verwendung beispielsweise eines Federstahls realisiert werden.

Die Klemmrippen sind erfindungsgemäß dadurch elastisch ausgebildet, dass ihre Wandstärken gegenüber der Wandstärke des Grundkörpers und/oder des Stegs der Lagerbuchse reduziert sind. Dies ist insbesondere dann sinnvoll, wenn die Lagerbuchse und die Klemmrippen aus einem thermoplastischen Kunststoff hergestellt ist. Die Lagerbuchse und/oder die Klemmrippen können generell, d.h. in allen entsprechenden Ausführungsformen als Kunststoffteil, beispielsweise aus Polyoxymethylen (POM) hergestellt sein.

Die Klemmrippen können mit der Lagerbuchse einteilig, insbesondere aus Kunststoff hergestellt sein.

Ein Ausführungsbeispiel der Erfindung ist exemplarisch in den beigefügten schematischen Zeichnungen dargestellt.

Es zeigen:
- Fig. 1: eine schematische perspektivische Teilansicht eines Haushaltskältegeräts mit einer Lagervorrichtung, die einen Lagerzapfen und eine aufgesteckte Lagerbuchse aufweist,
- Fig. 2: eine schematische perspektivische Teilansicht des Haushaltskältegeräts gemäß Fig. 1 mit einer von dem Lagerzapfen abgezogenen Lagerbuchse;
- Fig. 3: eine vergrößerte Detailansicht der Lagervorrichtung gemäß Fig. 1 mit der Lagerbuchse und erfindungsgemäßen Klemmvorrichtungen;
- Fig. 4: eine vergrößerte Querschnittsansicht der Lagerbuchse gemäß Fig. 3; und
- Fig. 5: eine Querschnittsansicht durch die Lagerbuchse gemäß Fig. 3 in einer auf den Lagerzapfen aufgesteckten Position.

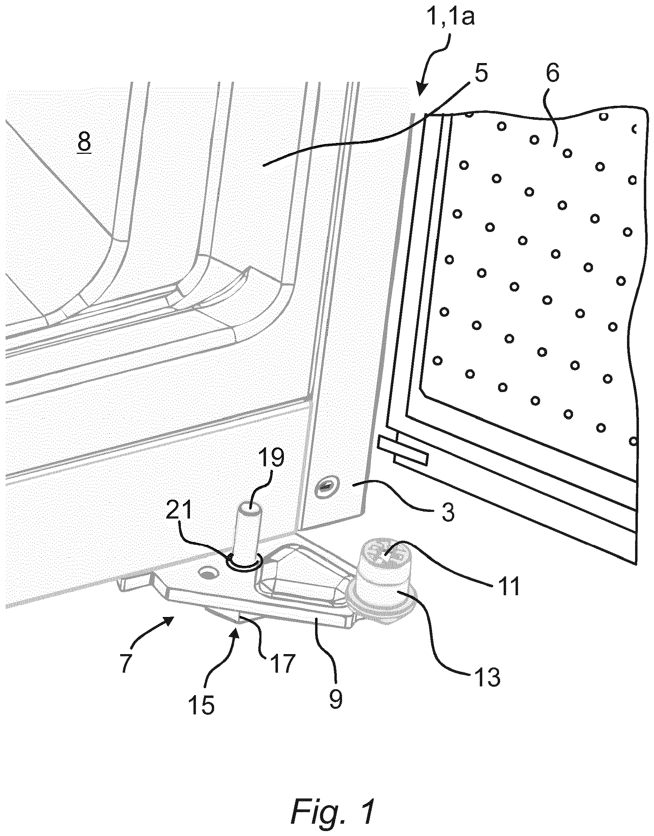

Die Fig. 1 zeigt in einer Teilansicht ein Haushaltsgerät 1. Das Haushaltsgerät 1 ist im Falle des vorliegenden Ausführungsbeispiels ein Haushaltskältegerät 1a. Das Haushaltskältegerät 1a weist einen Korpus 3 auf, von dem in der Fig. 1 lediglich ein Teilabschnitt, nämlich die rechte untere Ecke dargestellt ist. Der Korpus 3 kann einen Innenbehälter 5 aufweisen oder der Korpus 3 kann durch den Innenbehälter 5 gebildet werden. Der Korpus 3 bzw. der Innenbehälter 5 weist eine Lagervorrichtung 7 auf, an dem ein Türblatt 6 des Haushaltsgeräts 1 schwenkbar gelagert ist. Der Innenbehälter 5 begrenzt einen Geräteraum 8, der im Falle des dargestellten Haushaltskältegeräts 1a ein Kühlraum oder Gefrierraum sein kann.

Die Lagervorrichtung 7 umfasst im vorliegenden Ausführungsbeispiel einen Befestigungsflansch 9, an dem ein Lagerzapfen 11 ausgebildet ist. Der Befestigungsflansch 9 ist mit dem Korpus 3 bzw. dem Innenbehälter 5 verbunden, insbesondere verschraubt, so dass die Lagervorrichtung 7 an dem Korpus 3 bzw. dem Innenbehälter 5 starr festgelegt ist. Auf dem Lagerzapfen 11 ist eine Lagerbuchse 13 aufgesteckt. Die Lagervorrichtung 7 kann, wie im dargestellten Ausführungsbeispiel gezeigt, einen höhenverstellbaren Standfuß 15 aufweisen.

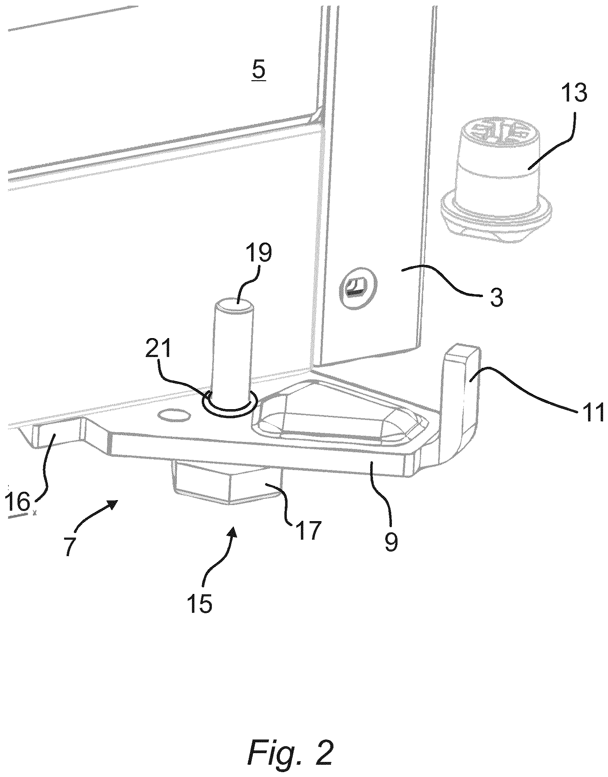

Die Lagervorrichtung 7 ist zusammen mit der Lagerbuchse 13 und dem Standfuß 15 in der Fig. 2 in einer vergrößerten perspektivischen Darstellung näher gezeigt. Die Lagerbuchse 13 ist zur besseren Darstellung des Lagerzapfens 11 in einer von dem Lagerzapfen 11 abgezogenen Position gezeigt.

Die Lagervorrichtung 7 ist im dargestellten Ausführungsbeispiel aus einem Flachstahl-Halbzeug durch Stanzen der Außenkontur und Biegen des Lagerzapfens 11 hergestellt. Der Lagerzapfen 11 ist insoweit einteilig mit dem Befestigungsflansch 9 ausgebildet. Dazu sind der Befestigungsflansch 9 und der Lagerzapfen 11 als ein Lagerwinkel aus einem gestanzten und gebogenen Metallblech hergestellt. Der Befestigungsflansch 9 weist eine in etwas dreieckige Grundform auf, wobei an einer langen Basisseite Schraublaschen 16 angeformt sind, über welche die Lagervorrichtung 7 starr mit dem Korpus 3 bzw. dem Innenbehälter 5 verschraubt werden kann. An einem der langen Basisseite gegenüberliegendem spitzen Ende des Befestigungsflansches 9 ist der Lagerzapfen 11 ausgebildet. Der Lagerzapfen 11 ist um 90 Grad aus der Ebene des Befestigungsflansches 9 heraus vertikal nach oben abgebogen, so dass die Lagerbuchse 13 in senkrechter Richtung von oben auf den Lagerzapfen 11 aufgesteckt werden kann.

Aufgrund der Tatsache, dass der Lagerzapfen 11 als ein Biegeabschnitt des ebenen Flachstahl-Halbzeugs hergestellt ist, weist der Lagerzapfen 11 einen rechteckigen Querschnitt auf. Zur Bildung eines Scharnierzapfens, an dem das Türblatt 6 des Haushaltskältegeräts 1a schwenkbar gelagert werden kann, wird die Lagerbuchse 13 auf den Lagerzapfen 11 mit rechteckigem Querschnitt aufgesteckt, so dass die aufgesteckte Lagerbuchse 13 aufgrund ihrer zylindrischen Außenkontur den Scharnierzapfen bildet.

Der Standfuß 15 weist einen Schraubenkopf 17 auf, der mit einem Gewindeschaft 19 verbunden ist. Das Haushaltskältegerät 1a steht mit jeweils einem Schraubenkopf 17 mehrerer, insbesondere zwei oder vier Standfüße 15 auf einem Boden auf. Der Gewindeschaft 19 durchdringt eine Gewindebohrung 21 des Befestigungsflansches 9. Durch Drehen des Schraubenkopfes 17 kann der Standfuß 15 höhenverstellt werden.

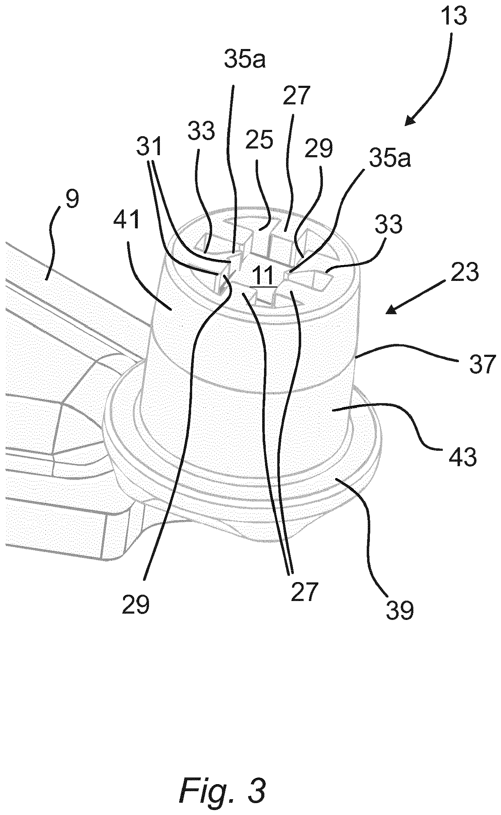

Die Lagerbuchse 13 weist, wie in Fig. 3 näher gezeigt, einen zumindest im Wesentlichen hohlzylindrischen Grundkörper 23 auf. Der Grundkörper 23 weist eine innere Mantelwand 25 auf, die im dargestellten Ausführungsbeispiel mit insgesamt sechs von der inneren Mantelwand 25 des Grundkörper 23 in das Zentrum der Lagerbuchse 13 vorspringenden Stegen 27 ausgestattet ist. Die Kontur des Querschnitts jeden Stegs 27 weist zwei Ecken 31 mit rechten Winkel auf, welche einen geraden Stirnkonturabschnitt einer Stirnfläche 29 des Stegs 27 begrenzen. Im dargestellten Ausführungsbeispiel ist an jeweils genau einer sich an die Stirnfläche 29, insbesondere in eine Ecke 31 anschließenden Seitenwand 33 zweier gegenüberliegender Stege 27 eine erfindungsgemäße Klemmrippe 35a ausgebildet.

Eine äußere Mantelwand 37 der Lagerbuchse 13 weist einen geradzylindrischen Mantelwandabschnitt 43 auf. An einem dem festen Ende des Lagerzapfens 11 zuweisenden Ende weist die Lagerbuchse 13 einen radial vorspringenden Ringbund 39 auf. Der Ringbund 39 kann als Sitzfläche für das Türblatt 6 des Haushaltskältegeräts 1a dienen. An einem freien Ende der Lagerbuchse 13, d.h. an einem dem Ringbund 39 gegenüberliegenden Ende der Lagerbuchse 13 weist die Lagerbuchse 13 einen kegelstumpfförmigen Mantelwandabschnitt 41 auf. Der kegelstumpfförmige Mantelwandabschnitt 41 kann dazu dienen, die Lagerbuchse 13 leicht zentrieren zu können, wenn sie in eine Sitzaufnahme des Türblatts 6 eingesteckt wird, bzw. wenn das Türblatt 6 mit seiner Sitzaufnahme auf die Lagerbuchse 13 aufgesteckt wird. Insoweit kann die Montage des Türblatts 6 an der Lagervorrichtung 7 vereinfacht werden.

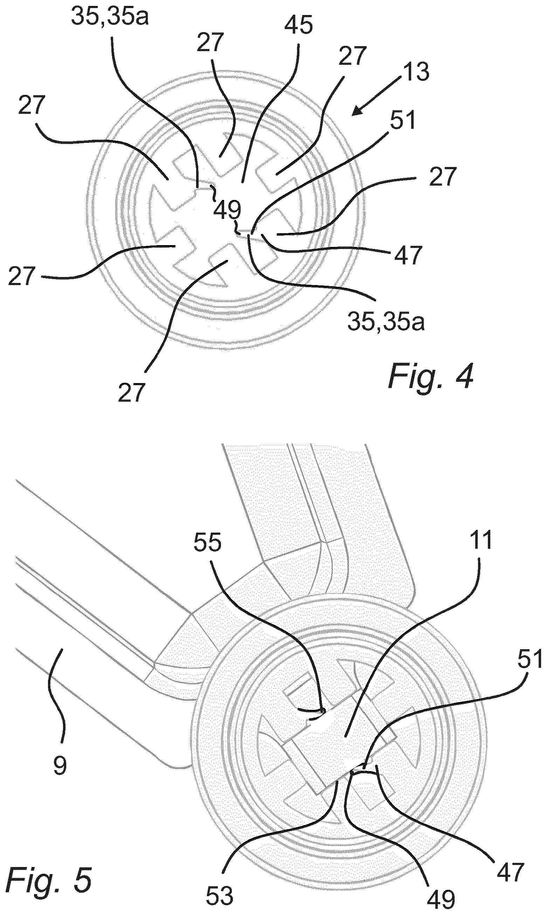

Wie in den Querschnittsansichten der Fig. 4 und Fig. 5 dargestellt, sind die Stege 27 , d.h. in ihrer Gestalt und Größe an die Größe, Gestalt und Kontur, der lichten Öffnung 45 der Lagerbuchse 13, in welche der Lagerzapfen 11 einzustecken ist, bzw. dem Querschnitt des Lagerzapfens 11 angepasst. Die Stege 27 begrenzen damit die Öffnung 45 der Lagerbuchse 13 auf das Maß des Lagerzapfens 11.

Im dargestellten Ausführungsbeispiel ist an jeweils genau einer sich an die Stirnfläche 29, insbesondere in eine Ecke 31 anschließenden Seitenwand 33 zweier gegenüberliegender Stege 27 eine erfindungsgemäße Klemmrippe 35a ausgebildet. Bereits eine einzelne Klemmrippe 35a oder aber zwei oder mehrere Klemmrippen 35a können die erfindungsgemäße Klemmvorrichtung 35 bilden oder zumindest Teil der Klemmvorrichtung 35 sein.

Die Klemmvorrichtung 35, bzw. die beiden Klemmrippen 35a sind mit der Lagerbuchse 13 einteilig ausgebildet. Die beiden Klemmrippen 35a sind in Richtung des Lagerzapfens 11 vorspringend ausgebildet. Im dargestellten Ausführungsbeispiel sind zwei Klemmrippen 35a an jeweils einer Seitenwand 33 zweier Stege 27 angeformt. Jede Klemmrippe 35a weist einen mit der Lagerbuchse 13, bzw. mit dem jeweiligen Steg 27 der Lagerbuchse 13 verbundenen Basisabschnitt 47, einen freien, an dem Lagerzapfen 11 anliegenden Kopfabschnitt 49 und einen den Basisabschnitt 47 mit dem Kopfabschnitt 49 verbindenden Stegabschnitt 51 auf. Der Stegabschnitt 51 ist unter einem vom rechten Winkel abweichenden Winkel, insbesondere in einem Winkel von 45 Grad, bezüglich der Oberfläche 53 des Lagerzapfens 11 ausgerichtet.

Ist, wie in Fig. 4 gezeigt, die Lagerbuchse 13 noch nicht auf den Lagerzapfen 11 aufgesteckt, so erstreckt sich eine nach innen vorspringende Rippenkante 55 der Klemmrippe 35a mit ihrem freien Ende über die Stirnfläche 29 des zugehörigen Stegs 27 hinaus. Die Klemmrippe 35a ist dadurch elastisch ausgebildet, dass ihre Wandstärke gegenüber der Wandstärke des Grundkörpers 23 bzw. gegenüber der Wandstärke des Stegs 27 reduziert ist. Ist die Lagerbuchse 13, wie in Fig. 5 gezeigt, auf den Lagerzapfen 11 aufgesteckt, so werden die beiden Klemmrippen 35a elastisch umgebogen und es stellt sich in den Klemmrippen 35a eine Federspannkraft ein. Die Federspannkraft wiederum drückt von gegenüberliegenden Seiten gegen den Lagerzapfen 11 und klemmt dadurch die Lagerbuchse 13 auf dem Lagerzapfen 11 fest. Im dargestellten Ausführungsbeispiel sind zwei in Richtung des Lagerzapfens 11 vorspringende Klemmrippen 35a deshalb an in das Zentrum der Lagerbuchse 11 vorspringenden gegenüberliegenden inneren Stegen 27 der Lagerbuchse angeordnet.

### BEZUGSZEICHENLISTE

- 1: Haushaltsgerät
- 1a: Haushaltskältegerät
- 3: Korpus
- 5: Innenbehälter
- 6: Türblatt
- 7: Lagervorrichtung
- 8: Geräteraum
- 9: Befestigungsflansch
- 11: Lagerzapfen
- 13: Lagerbuchse
- 15: Standfuß
- 16: Schraublaschen
- 17: Schraubenkopf
- 19: Gewindeschaft
- 21: Gewindebohrung
- 23: Grundkörper
- 25: innere Mantelwand
- 27: Stege
- 29: Stirnfläche
- 31: Ecken
- 33: Seitenwand
- 35: Klemmvorrichtung
- 35a: Klemmrippe
- 37: äußere Mantelwand
- 39: Ringbund
- 41: kegelstumpfförmiger Mantelwandabschnitt
- 43: geradzylindrischer Mantelwandabschnitt
- 45: Öffnung
- 47: Basisabschnitt
- 49: Kopfabschnitt
- 51: Stegabschnitt
- 53: Oberfläche
- 55: Rippenkante

## Patentansprüche

1. Haushaltsgerät, insbesondere Haushaltskältegerät (1a), aufweisend einen Korpus (3), einen im Korpus (3) angeordneten Geräteraum (8) und ein zum Öffnen und Schließen des Geräteraums (8) ausgebildetes Türblatt (6), das schwenkbar bezüglich des Korpus (3) mittels wenigstens einer Lagervorrichtung (7) gelagert ist, die einen Lagerzapfen (11) und eine auf den Lagerzapfen (11) aufgesteckte Lagerbuchse (13) aufweist, wobei die Lagervorrichtung (7) eine Klemmvorrichtung (35) aufweist, die ausgebildet ist, die Lagerbuchse (13) in ihrer auf den Lagerzapfen (11) aufgesteckten Position an dem Lagerzapfen (11) zu halten, wobei die Lagerbuchse eine zumindest im Wesentlichen kreiszylindrische Außenkontur aufweist und der Lagerzapfen selbst eine rechteckige Querschnittskontur aufweist, wobei die Lagerbuchse (13) die Klemmvorrichtung (35) aufweist, wobei die Lagerbuchse (13) in das Zentrum der Lagerbuchse (13) vorspringende gegenüberliegende innere Stege (27) aufweist, wobei die Klemmvorrichtung (35) von zwei elastisch ausgebildeten, insbesondere aus einem elastischen Material hergestellten, Klemmrippen (35a) gebildet wird, deren Wandstärken gegenüber der Wandstärke des Grundkörpers (23) und/oder eines Stegs (27) der Lagerbuchse (13) reduziert sind und die an den Stegen (27) angeordnet sind, so dass der Lagerzapfen (11) von zwei gegenüberliegenden Seiten geklemmt ist, wobei die Lagerbuchse (13) einen zumindest im Wesentlichen hohlzylindrischen Grundkörper (23) aufweist, der eine innere Mantelwand (25) aufweist, wobei die Mantelwand (25) die Stege (27) aufweist, **dadurch gekennzeichnet, dass** die Kontur des Querschnitts eines Stegs (27) zwei rechte Winkel aufweist, welche einen geraden Stirnkonturabschnitt einer Stirnfläche (29) des Stegs (27) begrenzen, und mindestens einer sich an die Stirnfläche (29), insbesondere in einem rechten Winkel, anschließenden Seitenwand (33) des Stegs (27) die Klemmrippe (35a) angeordnet, insbesondere ausgebildet, ist und dass die Klemmrippen (35a) an ihrem freien Enden eine über die Stirnfläche (29) des Stegs (27) nach innen vorspringende Rippenkanten (55) aufweisen.

2. Haushaltsgerät nach Anspruch 1, **dadurch gekennzeichnet, dass** die Klemmvorrichtung (35) mit der Lagerbuchse (13) verbunden oder einteilig mit der Lagerbuchse (13) ausgebildet ist.

3. Haushaltsgerät nach einem der vorhergehenden Ansprüche, **dadurch gekennzeichnet, dass** die Klemmrippen (35a) einen mit der Lagerbuchse (13) verbundenen Basisabschnitt (47), einen freien, an dem Lagerzapfen (11) anliegenden Kopfabschnitt (49) und einen den Basisabschnitt (47) mit dem Kopfabschnitt (49) verbindenden Stegabschnitt (51) aufweisen, der unter einem vom rechten Winkel abweichenden Winkel, insbesondere in einem Winkel von 45 Grad, bezüglich einer Oberfläche (53) des Lagerzapfens (11) ausgerichtet ist.

4. Haushaltsgerät nach einem der vorhergehenden Ansprüche, **dadurch gekennzeichnet, dass** an genau einer sich an die Stirnfläche (29), insbesondere in einem rechten Winkel, anschließenden Seitenwand (33) des Stegs (27) die Klemmrippe (35a) angeordnet, insbesondere ausgebildet, ist.

5. Haushaltsgerät nach einem der vorhergehenden Ansprüche, **dadurch gekennzeichnet, dass** zwei in Richtung des Lagerzapfens (11) vorspringende Klemmrippen (35a) an gegenüberliegenden Seiten einer inneren Mantelwand (25) der Lagerbuchse (13) angeordnet sind.

6. Haushaltsgerät nach einem der vorhergehenden Ansprüche, **dadurch gekennzeichnet, dass** die Klemmrippen (35a) mit der Lagerbuchse (13) einteilig, insbesondere aus Kunststoff hergestellt sind.

## Claims

1. Household appliance, in particular household refrigeration appliance (1a), having a carcass (3), an appliance compartment (8) arranged in the carcass (3) and a door leaf (6), which is embodied for opening and closing the appliance compartment (8) and is pivotably mounted in relation to the carcass (3) by means of at least one bearing apparatus (7), which has a bearing pin (11) and a bearing bush (13) plugged onto the bearing pin (11), wherein the bearing apparatus (7) has a clamping apparatus (35), which is embodied to hold the bearing bush (13) in its position on the bearing pin (11) in which it is plugged onto the bearing pin (11), wherein the bearing bush has an at least substantially circular cylindrical outer contour and the bearing pin itself has a rectangular cross-sectional contour, wherein the bearing bush (13) has the clamping apparatus (35), wherein the bearing bush (13) has opposing inner webs (27) that project into the centre of the bearing bush (13), wherein the clamping apparatus (35) is formed by two clamping ribs (35a), which are embodied in a resilient manner, in particular are produced from a resilient material, and the wall thicknesses of which are reduced compared to the wall thickness of the base body (23) and/or a web (27) of the bearing bush (13), and which clamping ribs (35a) are arranged on the webs (27), so that the bearing pin (11) is clamped from two opposing sides, wherein the bearing bush (13) has an at least substantially hollow cylindrical base body (23), which has an inner peripheral wall (25), wherein the peripheral wall (25) has the webs (27), **characterised in that** the contour of the cross-section of a web (27) has two right angles, which delimit a straight end contour section of an end face (29) of the web (27), and clamping rib (35a) is arranged, in particular embodied, on at least one side wall (33) of the web (27) that connects to the end face (29), in particular at a right angle, and that the clamping ribs (35a) have a rib edge (55) that projects inwards over the end face (29) of the web (27) at its free end.

2. Household appliance according to claim 1, **characterised in that** the clamping apparatus (35) is connected to the bearing bush (13) or is embodied in one piece with the bearing bush (13).

3. Household appliance according to one of the preceding claims, **characterised in that** the clamping ribs (35a) have a base section (47) connected to the bearing bush (13), a free head section (49) in contact with the bearing pin (11) and a web section (51), which connects the base section (47) to the head section (49) and is aligned under an angle that differs from a right angle, in particular at an angle of 45 degrees, in relation to a surface (53) of the bearing pin (11).

4. Household appliance according to one of the preceding claims, **characterised in that** the clamping rib (35a) is arranged, in particular embodied, on precisely one side wall (33) of the web (27) that connects to the end face (29), in particular at a right angle.

5. Household appliance according to one of the preceding claims, **characterised in that** two clamping ribs (35a) that project in the direction of the bearing pin (11) are arranged on opposing sides of an inner peripheral wall (25) of the bearing bush (13).

6. Household appliance according to one of the preceding claims, **characterised in that** the clamping ribs (35a) are produced in one piece with the bearing bush (13), in particular from plastic.

## Revendications

1. Appareil ménager, en particulier appareil frigorifique ménager (1a), présentant un corps (3), un espace d'appareil (8) disposé dans le corps (3) et un ouvrant (6) formé pour ouvrir et fermer l'espace d'appareil (8), lequel ouvrant est logé de façon pivotante par rapport au corps (3) au moyen d'au moins un dispositif de palier (7), qui présente un tourillon (11) et un coussinet (13) inséré sur le tourillon (11), dans lequel le dispositif de palier (7) présente un dispositif de pincement (35), formé afin de maintenir dans sa position insérée sur le tourillon (11) le coussinet (13) sur le tourillon (11), dans lequel le coussinet présente un contour extérieur au moins essentiellement cylindrique circulaire et le tourillon présente un contour transversal rectangulaire, dans lequel le coussinet (13) présente le dispositif de pincement (35), dans lequel le coussinet (13) présente au centre du coussinet (13) des âmes (27) intérieures opposées saillantes, dans lequel le dispositif de pincement (35) est formé par deux nervures de pincement (35a) formées élastiquement, en particulier fabriquées en un matériau élastique, dont les épaisseurs de paroi sont réduites par rapport à l'épaisseur de paroi du corps de base (23) et/ou d'une âme (27) du coussinet (13) et disposées sur les âmes (27), de sorte que le tourillon (11) est pincé en deux côtés opposés, dans lequel le coussinet (13) présente un corps de base (23) essentiellement cylindrique creux, qui présente une paroi de manteau intérieure (25), dans lequel la paroi de manteau (25) présente les âmes (27), **caractérisé en ce que** le contour de la section d'une âme (27) présente deux angles droits, qui délimitent une section de contour frontale droite d'une surface frontale (29) de l'âme (27), et la nervure de pincement (35a) est disposée, en particulier formée, en au moins une paroi latérale (33) de l'âme (27) contiguë à la surface frontale (29), en particulier à angle droit et **en ce que** les nervures de pincement (35a) présentent en leurs extrémités libres des bords de nervure (55) faisant saillie vers l'intérieur sur la surface frontale (29) de l'âme (27).

2. Appareil ménager selon la revendication 1, **caractérisé en ce que** le dispositif de pincement (35) est relié au coussinet (13) ou formé en une seule pièce avec le coussinet (13).

3. Appareil ménager selon l'une des revendications précédentes, **caractérisé en ce que** les nervures de pincement (35a) présentent une section de base (47) reliée au coussinet (13), une section de tête (49) libre contiguë au tourillon (11) et une section d'âme (51) reliant la section de base (47) à la section de tête (49), laquelle section d'âme est orientée selon un angle divergeant de l'angle droit, en particulier selon un angle de 45 degrés, par rapport à une surface (53) du tourillon (11).

4. Appareil ménager selon l'une des revendications précédentes, **caractérisé en ce que** la nervure de pincement (35a) est disposée, en particulier formée, sur précisément une paroi latérale (33) de l'âme (27) contiguë à la surface frontale (29), en particulier à angle droit.

5. Appareil ménager selon l'une des revendications précédentes, **caractérisé en ce que** deux nervures de pincement (35a) faisant saillie en direction du tourillon (11) sont disposées en des côtés opposés d'une paroi de manteau intérieure (25) du coussinet (13).

6. Appareil ménager selon l'une des revendications précédentes, **caractérisé en ce que** les nervures de pincement (35a) sont fabriquées en une seule pièce avec le coussinet (13), en particulier en plastique.
